# EUROPÄISCHE PATENTSCHRIFT

(11) **EP 0 882 924 B1**
(45) Veröffentlichungstag und Bekanntmachung des Hinweises auf die Patenterteilung: **27.08.2008**
(21) Anmeldenummer: 98109994.8
(22) Anmeldetag: 02.06.1998
(51) Int. Cl.: F16L 11/127

(54) **Elektrisch leitfähiger Schlauch**
Electrically conductive hose
Tuyau souple électriquement conducteur

(30) Priorität: 06.06.1997 DE 19724038
(43) Veröffentlichungstag der Anmeldung: 09.12.1998
(73) Patentinhaber: ContiTech Schlauch GmbH, 30165 Hannover (DE)
(72) Erfinder: Rieth, Herbert, 34497 Korbach-Goldhausen (DE); Wydra, Wolfgang, 34516 Vöhl-Oberburg (DE)
(74) Vertreter: Finger, Karsten

(56) Entgegenhaltungen:
- DE-A- 3 202 854
- DE-B- 1 168 187
- US-A- 4 059 847
- US-A- 4 405 969
- US-A- 4 675 780

## Beschreibung

Die Erfindung bezieht sich auf einen Schlauch, d. h. auf ein Rohr, das Biegsamkeit als wesentliches Merkmal voraussetzt. Zu diesem Zweck ist der Schlauch aus flexiblem, insbesondere gummielastischem, Material gebildet und mit Fasern bzw. Fäden oder mit Gewebe, z. B. aus Textilien, verstärkt. Neben der Biegsamkeit wird eine elektrische Leitfähigkeit gefordert, insbesondere um elektrische Aufladungen zu vermeiden.

Die bekannten elektrisch leitfähigen Schläuche können in zwei Gruppen eingeteilt werden:
- Schläuche, deren Wandungen elektrisch leitende Teilchen enthalten , z. B. in der Form, daß die ihre Wandungen bildenden Gummimischungen Rußpulver oder eingemischte Kohlenstoff-Kurzfasern enthalten (siehe z. B. DE-GM 79 34 101, DE-OS 21 03 394, DE-PS 24 20 753, DE-PS 26 42 442 und DE-PS 29 44 858, sowie DE 195 07 025 A1 und DE-PS 40 25 301) und
- Schläuche, in deren Wandungen metallische Leiter, wie Metallfäden, -drähte oder -litzen, eingearbeitet sind (siehe z. B. DE-AS 11 68 187, DE-PS 22 55 957 und DE-OS 28 00 789).

Die durch Ruß oder Kohlenstoff-Kurzfasern leitfähig gemachten Schlauchwandungen weisen im allgemeinen nicht mit ausreichender Sicherheit den für elektrisch leitende Schläuche geforderten geringen elektrischen Widerstand von weniger als 10.000 Ohm pro Meter Schlauchlänge auf. Dabei macht sich nachteilig bemerkbar, daß der elektrische Widerstand abhängig von derjeweiligen Länge des Schlauchs ist. Zudem können Verbiegungen, Dehnungen, Stauchungen und sonstige mechanische Belastungen des Schlauches seinen elektrischen Widerstand verändern.

Bei Schläuchen, die mit Hilfe von metallischen Leitern elektrisch leitend gemacht worden sind, kann es zu Korrosion kommen, so daß die elektrische Leitung ebenso wie durch überdehnung oder Bruch unterbrochen wird. Ferner kann es zwischen den metallischen Leitern des Schlauchs und dem Untergrund (Erdboden) zu elektrischen Entladungen und Funkenbildung und hierdurch beim Umgang mit brennbaren Materialien zu Entzündungen kommen. Dies hat dazu geführt, daß die von Schlauchanwendern herausgegebenen Spezifikationen und Normen (z. B. für Flugzeugbetankungsschläuche), den Einsatz von Schläuchen, die metallische Leiter enthalten, grundsätzlich verbieten.

Aus der US-A-4 675 780 ist ein elektrisch leitfähiger Schlauch bekannt, der alle merkmale des Oberbegriffs des Anspruchs beinhaltet.

Aus den genannten Gründen besteht die vorliegende Aufgabe in der Schaffung eines elektrisch leitenden Schlauchs, der ohne Verwendung metallischer Leiter zuverlässig einen Widerstand von weniger als 10.000 Ω/m aufweist.

Diese Aufgabe wird erfindungsgemäß durch einen Schlauch der im Oberbegriff des Patentanspruchs 1 genannten Gattung gelöst, und zwar dadurch, daß dieser gemäß dem kennzeichnenden Teil des Anspruchs 1 ausgebildet ist. überraschenderweise hat sich gezeigt, daß die geforderten Widerstandswerte mittels in die Schlauchwandung eingearbeiteter, von einem Schlauch-Ende zum anderen verlaufender Kohlenstoff-Fasern oder -Fäden sicher erreicht werden.
Vorteilhafte Weiterbildungen ergeben sich aus den Unteransprüchen.

Der grundsätzliche Unterschied zu bekannten Schläuchen, deren Wandungen aus durch leitfähigen Ruß gefüllten Gummi-oder Kunststoff mischungen gebildet sind, ergibt sich daraus, daß der elektrische Widerstand von Kohlenstoff-Fasern um ein Vielfaches geringer ist als derjenige von rußgefüllten Gummi- oder Kunststoffmischungen. Er liegt etwa auf dem Niveau von Kupferleitern. Dagegen werden durch Einsatz von rußgefüllten Gummimischungen mit geringstmöglichem elektrischem Widerstand die Höchstwerte des bei elektrisch leitfähigen Schläuchen zulässigen elektrischen Widerstandes häufig überschritten.

In einer bevorzugten Ausführungsform sieht die Erfindung vor, die hochleitfähigen Kohlenstoff-Fasern oder -Fäden in eine - vorzugsweise durch Rußfüllung - leitfähige Gummi-oder Kunststoff-Matrix einzubetten. Sollte es dann zu Brüchen der Kohlenstoff-Fasern kommen, so bleibt der Widerstand des Schlauches trotzdem ausreichend niedrig, weil die Bruchstellen innerhalb der leitfähigen Gummi- oder Kunststoffmischung liegen, durch die sie auf kürzestem Wege wirksam überbrückt werden.

Obwohl die Kohlenstoff-Fasern selbst bereits relativ reißfest sind, kann ihre Haltbarkeit durch parallel eingearbeitete Textilfasern weiter verbessert werden.

Die Einarbeitung der Kohlenstoff-Fasern in die Schlauchwandung erfolgt vorzugsweise in Form einer zur Schlauchachse zentrierten Wendel (siehe z. B. DE-OS 28 00 798) oder in sogenannter "gependelter" Anordnung (siehe z. B. DE-PS 22 55 957).

Vorzugsweise sind die Kohlenstoff-Fasern unter einer äußeren textilen Geflechtslage und insbesondere zwischen einer äußeren und einer inneren Geflechtslage angeordnet. Auf diese Weise sind sie insbesondere vor äußeren mechanischen Einflüssen geschützt.

Sind die Kohlenstoff-Fasern als Endlosfasern ausgebildet, so ergibt sich eine besonders gute elektrische Leitfähigkeit, die zuverlässig reproduzierbar ist und nicht durch übergangswiderstände, wie sie zwischen Kurzfasern auftreten, beeinträchtigt wird.

Im übrigen sind die erfindungsgemäßen Schläuche vorzugsweise, wie auch bei anderen leitfähigen Schläuchen üblich, folgendermaßen aufgebaut: Sie besitzen eine gegenüber den in ihnen geförderten Fluiden resistente Innenseele und eine gegenüber äußeren Einflüssen unempfindliche elastomere Außenschicht, die zur weiteren Verbeserung der elektrischen Leitfähigkeit der Schlauchwandung durch Rußfüllung leitfähig gemacht ist. An den Schlauchenden sind elektrisch leitfähige, insbesondere metallische, Anschlußarmaturen angebracht, die mit den in die Schlauchwandung eingearbeiteten, von einem Schlauch-Ende zum anderen verlaufenden Kohlenstoff-Fasern direkt oder zumindest über die elektrisch leitenden Gummi- oder Kunststoffschichten der Schlauchwandung in elektrischem Kontakt stehen.

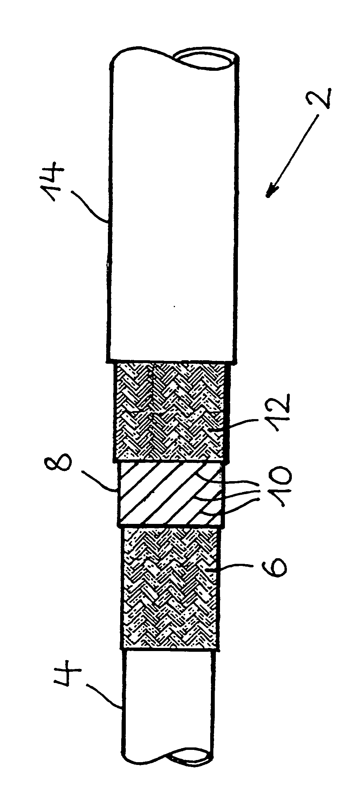

Im folgenden wird die Erfindung anhand eines Ausführungsbeispiels näher beschrieben. Die Abbildung zeigt ausschnittsweise einen mit Kohlenstoff-Fasern versehenen elektrisch leitenden Schlauch. Abwandlungen bezüglich des Schlauch-Aufbaus sind denkbar, ohne die Grundidee der Erfindung zu verlassen.

Der in der Abbildung dargestellte Schlauch 2 weist zunächst eine polymere Innenschicht 4 aus einem polymeren Material auf, das gegen die durch den Schlauch zu fördernden Fluide resistent ist. Diese Schlauchseele 4 ist umgeben von einer als Druckträger dienenden geflochtenen Textileinlage 6.

Auf dieser Textileinlage 6 befindet sich eine polymere, insbesondere elastomere, vorzugsweise durch eingemischten Ruß leitfähige Zwischenschicht 8. In diese Zwischenschicht 8 sind in gewendelter oder gependelter Anordnung von einem Schlauch-Ende zum anderen verlaufende Kohlenstoff-Fasern 10 eingebettet, die vorzugsweise als Endlos-Filamente ausgebildet sind. Die Zwischenschicht 8 und die darin eingebetteten Kohlenstoff-Fasern 10 sind von einem weiteren Druckträger 12 in Form eines Geflechts umgeben. D. h.: Die in die vorzugsweise leitfähige Gummimischung eingebetteten Kohlenstoff-Fasern 10 befinden sich zwischen den beiden Textilgeflechten 6, 12 des Schlauches 2.

Den Abschluß bildet eine polymere, insbesondere elastomere, gegen Umwelteinflüsse resistente Außenschicht 14, die vorzugsweise - wie an sich bekannt - durch eingemischten Ruß leitfähig gemacht ist und so zur Leitfähigkeit des Schlauches beiträgt.

### Bezugszeichenliste

- 2: elektrisch leitfähiger Schlauch
- 4: Innenschicht, "Schlauchseele"
- 6: Druckträger, Festigkeitsträger, Textileinlage
- 8: (leitfähige) Zwischenschicht
- 10: Kohlenstoff-Fasern
- 12: (weiterer) Druckträger, (weiterer) Festigkeitsträger
- 14: Außenschicht (Schlauchdecke)

## Patentansprüche

1. Aus gummielastischem Material bestehender elektrisch leitfähiger Schlauch, der mit Fasern und/oder Fäden oder mit Gewebe verstärkt ist und in die Schlauchwandung eingearbeitete, von einem Schlauchende zum anderen verlaufende, elektrisch leitfähige Kohlenstoff-Fasern oder -Faserstränge aufweist, wobei in die Faserstränge textile Fasern oder Fäden eingefügt sind, wobei wiederum die Kohlenstoff-Fasern als Endlosfilamente ausgebildet sind,
**gekennzeichnet dadurch,**
**dass** die Kohlenstoff-Fasern und/oder-Faserstränge in eine insbesondere durch Rußfüllung leitfähige Gummi- oder Kunststoffmischung eingebettet sind.

2. Schlauch nach Anspruch 1, **dadurch gekennzeichnet,dass** die Kohlenstoff-Fasern und/oder -Faserstränge wendelartig oder gependelt in Schlauchlängsrichtung verlaufen.

3. Schlauch nach Anspruch 1 oder 2, **dadurch gekennzeichnet, dass** die eingearbeiteten Kohlenstoff-Fasern und/oder-Faserstränge unter einer textilen Verstärkungslage der Schlauchwandung angeordnet sind.

4. Schlauch nach einem der Ansprüche 1 bis 3, **dadurch gekennzeichnet, dass** die Kohlenstoff-Fasern und/oder-Faserstränge in eine zwischen zwei Verstärkungslagen der Schlauchwandung angeordnete, aus einer leitfähigen Gummi- oder Kunststoffmischung gebildete Zwischenschicht eingebettet sind.

5. Schlauch nach einem der Ansprüche 1 bis 4, **dadurch gekennzeichnet, dass** er eine Außenschicht aufweist, die aus einer leitfähigen Gummi- oder Kunststoffmischung gebildet ist.

## Claims

1. Electrically conductive hose which comprises an elastic rubber material and is reinforced with fibres and/or threads or with fabric and has electrically conductive carbon fibres or fibre strands, which run from one end of the hose to the other, incorporated in the hose wall, with textile fibres or threads being inserted into the fibre strands, with the carbon fibres again being in the form of continuous filaments,
**characterized in that**
the carbon fibres and/or fibre strands are embedded in a rubber or plastic mixture which is conductive, in particular, on account of a carbon black filling.

2. Hose according to Claim 1, **characterized in that** the carbon fibres and/or fibre strands run in a helical or oscillating manner in the longitudinal direction of the hose.

3. Hose according to Claim 1 or 2, **characterized in that** the incorporated carbon fibres and/or fibre strands are arranged beneath a textile reinforcement layer of the hose wall.

4. Hose according to one of Claims 1 to 3, **characterized in that** the carbon fibres and/or fibre strands are embedded in an intermediate layer which is arranged between two reinforcement layers of the hose wall and is formed from a conductive rubber or plastic mixture.

5. Hose according to one of Claims 1 to 4, **characterized in that** it has an outer layer which is formed from a conductive rubber or plastic mixture.

## Revendications

1. Tuyau flexible électriquement conducteur, constitué d'un matériau élastique en caoutchouc renforcé de fibres et/ou de fils ou d'un tissu et qui présente des fibres de carbone ou des écheveaux de fibres de carbone électriquement conductrices qui s'étendent d'une extrémité du tuyau flexible à l'autre, des fibres ou des fils textiles étant insérés dans les écheveaux de fibres et les fibres de carbone étant à leur tour configurées comme filaments sans fin,
**caractérisé en ce que**
les fibres de carbone et/ou les écheveaux de fibres de carbone sont incorporés dans un mélange de caoutchouc ou de matière synthétique rendu conducteur par une charge de noir de carbone.

2. Tuyau flexible selon la revendication 1, **caractérisé en ce que** les fibres de carbone et/ou les écheveaux de fibres de carbone s'étendent en hélice ou en ondulation dans le sens de la longueur du tuyau flexible.

3. Tuyau flexible selon les revendications 1 ou 2, **caractérisé en ce que** les fibres de carbone et/ou les écheveaux de fibres de carbone incorporés sont disposés en dessous d'une couche textile de renfort de la paroi du tuyau flexible.

4. Tuyau flexible selon l'une des revendications 1 à 3, **caractérisé en ce que** les fibres de carbone et/ou les écheveaux de fibres de carbone sont incorporés dans une couche intermédiaire formée d'un mélange conducteur de caoutchouc ou de matière synthétique et disposée entre deux couches de renfort de la paroi du tuyau flexible.

5. Tuyau flexible selon l'une des revendications 1 à 4, **caractérisé en ce qu'**il présente une couche extérieure formée d'un mélange conducteur de caoutchouc ou de matière synthétique.
